**Europäisches Patentamt**

**European Patent Office**

**Office européen des brevets**

(19)

(11) Veröffentlichungsnummer: **0 256 028**
**B1**

(12) **EUROPÄISCHE PATENTSCHRIFT**

(45) Veröffentlichungstag der Patentschrift: **20.06.90**

(51) Int. Cl.⁵: **B 65 G 47/14**

(21) Anmeldenummer: **87900059.4**

(22) Anmeldetag: **18.12.86**

(86) Internationale Anmeldenummer:
**PCT/DE86/00517**

(87) Internationale Veröffentlichungsnummer:
**WO 87/04688 13.08.87 Gazette 87/18**

(54) **EINRICHTUNG ZUM SPEICHERN UND LAGERICHTIGEN ZUFÜHREN VON KLEINTEILEN.**

(30) Priorität: **30.01.86 DE 3602773**

(43) Veröffentlichungstag der Anmeldung:
**24.02.88 Patentblatt 88/08**

(45) Bekanntmachung des Hinweises auf die
Patenterteilung:
**20.06.90 Patentblatt 90/25**

(84) Benannte Vertragsstaaten:
**AT CH DE FR GB IT LI NL SE**

(56) Entgegenhaltungen:
**FR-A-1 071 920**
**US-A-2 592 141**
**US-A-29 395 67**
**US-A-32 245 53**

(73) Patentinhaber: **ROBERT BOSCH GMBH**
**Postfach 50**
**D-7000 Stuttgart 1 (DE)**

(72) Erfinder: **HÜTTER, Odo**
**Hugo-Wolf-Weg 17**
**D-7312 Kirchheim/Teck (DE)**
Erfinder: **JUNG, Rainer**
**Weidenweg 10**
**D-7250 Leonberg (DE)**
Erfinder: **KURZ, Werner**
**Hellerweg 26**
**D-7300 Esslingen (DE)**
Erfinder: **SPERR, Gerhardt**
**Beim Wasserturm 51**
**D-7050 Waiblingen (DE)**
Erfinder: **VOSS, Jürgen**
**Unkenweg 23**
**D-7000 Stuttgart 31 (DE)**

Courier Press, Leamington Spa, England.

EP 0 256 028 B1

**Beschreibung**

Die Erfindung bezieht sich auf eine Einrichtung zum Speichern und lagerichtigen Zuführen von Kleinteilen nach der Gattung des Hauptanspruchs. Bei bekannten Einrichtungen dieser Gattung (US—A—3 224 553) werden die Kleinteile aus einem externen Speicher auf eine Förderstrecke gebracht, die ihrerseits die Kleinteile einer Orientierungsstrecke zuführt. Diese vereinzelt die Kleinteile, positioniert sie lagerichtig oder führt sie gegebenenfalls einer Rückführstrecke zu. Das Auftreten eines größeren Haufwerks von Kleinteilen führt in diesem Bereich verstärkt zu Stauungen, die sich nur unbefriedigend selbsttätig auflösen.

Die erfindungsgemäße Anordnung mit den kennzeichnenden Merkmalen des Hauptanspruchs hat demgegenüber den Vorteil, daß die Haufwerksbildung auf den Eingangsbereich des Schrägförderers konzentriert wird. Dessen Eignung als Unter- bzw. Zwischenspeicher wird gemäß Anspruch 1 wirkungsvoll dadurch unterstützt bzw. verbessert, daß parallel neben der Förderstrecke des Schrägförderers eine vorzugsweise in der gleichen Schrägebene liegende Ausweichstrecke für seitlich aus der Förderstrecke abgedrängte Kleinteile vorgesehen ist, deren Oberfläche und Antrieb so auf die Beschaffenheit der Kleinteile abgestimmt sind, daß diese auf der Ausweichstrecke zum Eingangsbereich des Schrägförderers zurückgelangen. Die Ausweichstrecke sorgt dafür, daß sich Kleinteile quer zur Förderrichtung nicht verklemmen und daß sich das Haufwerk entlang der Förderstrecke sicher abbaut, so daß die Kleinteile bereits weitgehend vereinzelt sind, wenn sie im Ausgangsbereich des Schrägförderers ankommen.

Durch die in den Unteransprüchen aufgeführten Maßnahmen sind vorteilhafte Weiterbildungen der im Hauptanspruch gekennzeichneten Anordnung möglich.

Zur Unterstützung der Maßnahmen gemäß dem Anspruch 1 wird gemäß Anspruch 2 weiter vorgeschlagen, daß der Steigungswinkel des Schrägförderers mindestens so groß gewählt wird, daß aufeinanderliegende Kleinteile bei vorhandener Ausweichmöglichkeit und zumindest bei laufendem Antrieb voneinander abrutschen.

Die Merkmale der Ansprüche 3 und 4 vereinfachen den Aufbau des Schrägförderers und mit dem Merkmal des Anspruchs 5 kann dessen Funktion vorteilhaft beeinflußt werden.

Die Merkmale des Anspruchs 6 führen zu den Vorteilen, daß die Kleinteile aus dem Orientierungsförderer in einen definiert begrenzten Bereich auf den Schrägförderer zurückgeführt werden, der so weit von dessen höher liegenden Ausgangsbereich entfernt ist, daß sich dort und im Eingangsbereich des Orientierungsförderers kein örtlicher, den Zugang der Kleinteile zur weiterführenden Orientierungsstrecke behindernder Umlaufstau bilden kann, und daß die Kleinteile klemmfrei aus dem Orientierungsförderer zurückgeführt werden.

Die Maßnahmen nach Anspruch 6 können entweder für sich allein oder besonders vorteilhaft in Kombination mit einem Schrägförderer mit einer Ausweichstrecke gemäß Anspruch 1 vorgesehen werden.

Versuche haben ergeben, daß durch eine Kombination der Merkmale aus den Ansprüchen 1, 2 und 6 eine Einrichtung geschaffen werden kann, bei welcher die Förderleistung ohne Einbuße an Funktionssicherheit in weiten Grenzen variiert werden kann. Dadurch ergibt sich ein besonders großer Anwendungsbereich der Einrichtung und eine gute Anpaßbarkeit an Layout-Varianten von Montagestationen und -anlagen.

Besonders vorteilhaft ist es, wenn gemäß Anspruch 7 die im Orientierungsförderer zurückgewiesenen Kleinteile gezielt auf den Eingangsbereich des Schrägförderers abgeworfen werden. Dadurch wird die Bildung bzw. Erhaltung eines Haufwerks im Schrägförderer auf dessen Eingangsbereich konzentriert, welches sich beim Transport zum Ausgangsbereich auflöst, so daß dem Schrägförderer auch eine (Zwischen-)Speicherfunktion zugeordnet werden kann, ohne daß die ordnungsgemäße Zuführung der Kleinteile zum Orientierungsförderer beeinträchtigt wird.

Der Anwendungsbereich der Einrichtung kann erweitert werden, wenn gemäß den Ansprüchen 8 und 9 die Rückführstrecke einen eigenen Antrieb hat und/oder wenn der Auslauf des Orientierungsförderers als Pufferstrecke ausgebildet ist, die mit der Orientierungsstrecke schnittstellenfrei verbunden ist.

Wenn der Schrägförderer als Schwingförderer ausgebildet ist, kann gemäß Anspruch 11 der Speicherbehälter mit dem Schrägförderer starr gekoppelt sein, so daß sich für einen Speicherbehälter mit bewegter Bodenfläche ein eigener Antrieb für diese erübrigt.

Die erfindungsgemäße Einrichtung kann weiter vereinfacht werden, wenn gemäß Anspruch 12 der Speicherbehälter über der Förderstrecke des Schrägförderers angeordnet ist.

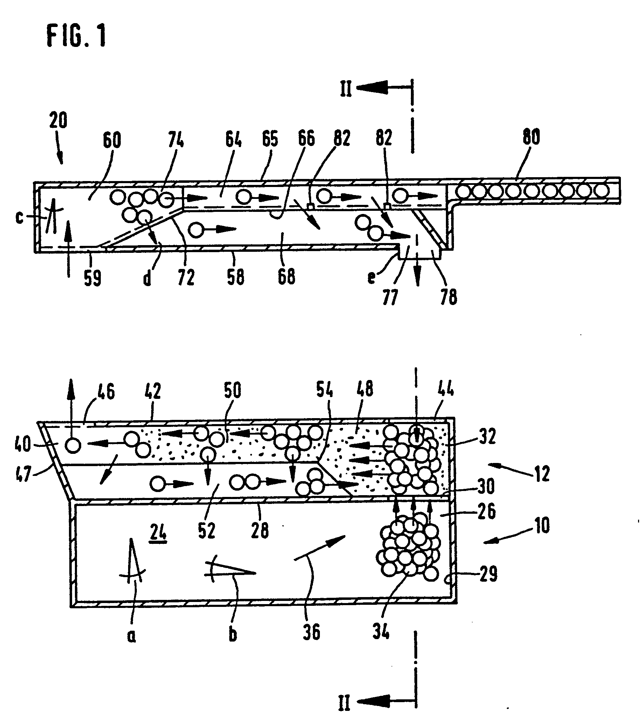

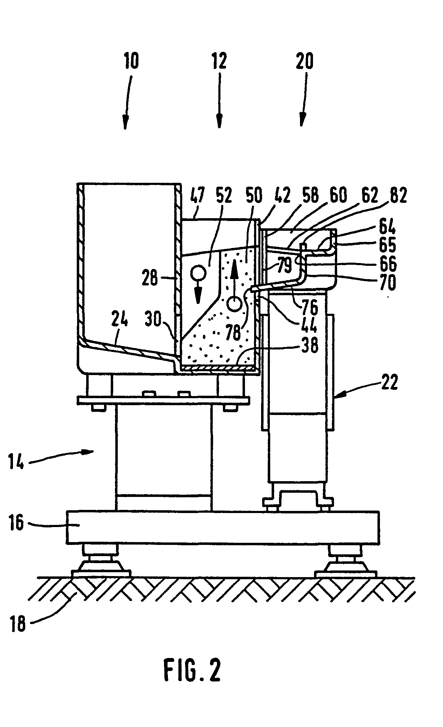

Ein Ausführungsbeispiel der Erfindung ist in der Zeichnung dargestellt und in der nachfolgenden Beschreibung näher erläutert. Es zeigen in schematischer Darstellung Figur 1 eine Draufsicht auf den Orientierungsförderer und den Schrägförderer samt Speicherbehälter vor dem Zusammenbau und Figur 2 einen Schnitt durch die Einrichtung nach der Linie II—II in Figur 1.

Beschreibung des Ausführungsbeispiels

Die Einrichtung hat einen Speicherbehälter 10, der mit einem linearen Schrägförderer 12 eine Baueinheit bildet. Beide Aggregate 10, 12 haben einen gemeinsamen Schwingantrieb 14, der auf einer Grundplatte 16 sitzt und über diese auf einem Fundament 18 abgestützt ist. Parallel neben dem Schrägförderer 12 ist ein linearer Orientierungsförderer 20 angeordnet, der einen Schwingantrieb 22 hat, welcher ebenfalls auf der Grundplatte 16 befestigt ist.

Der Speicherbehälter 10 hat einen geneigten Boden 24, der in der Behälterecke 26 seinen tiefsten Bereich hat. Dort ist in einer gemeinsamen Zwischenwand 28 eine Öffnung 30 vorgesehen, die in einen Eingangsbereich 32 des Schrägförderers 12 führt. Der Boden 24 ist gegen die Zwischenwand 28 und gegen die eine Querwand 29 des Speicherbehälters 10 geneigt, wie in Figur 1 durch die Winkelsymbole a und b gezeigt ist. Ferner ist durch das Symbol 34 ein Haufwerk von im Speicherbehälter 10 befindlichen Kleinteilen angedeutet und durch einen Pfeil 36 versinnbildlicht, daß bei laufendem Schwingantrieb 14 die gespeicherten Kleinteile gegen die Öffnung 30 gefördert werden.

Der Schrägförderer 12 hat einen Boden 38, der vom Eingangsbereich 32 ansteigend zu einem höherliegenden Ausgangsbereich 40 führt. An der vom Speicherbehälter 10 abgekehrten Seite ist der Schrägförderer 10 von einer Seitenwand 42 begrenzt, die im Eingangsbereich 32 mit einer nach oben offenen Randausklinkung 44 versehen ist und im Ausgangsbereich 40 eine bis zum Boden 38 reichende Öffnung 46 frei läßt. Der Ausgangsbereich 40 ist von einer Wand 47 begrenzt, welche zur Förderrichtung schräggestellt ist und im Ausgangsbereich ankommenden Kleinteile in die Öffnung 46 lenkt.

Der Boden 38 des Schrägförderers 12 hat einen Flächenbereich 48 mit rauher Oberfläche, welche den Eingangsbereich 32 vollständig und den übrigen Bereich des Schrägförderers 12 bis etwa zu dessen halben Breite überdeckt. Dadurch ergibt sich eine Förderstrecke 50, auf der die Kleinteile vom Eingangsbereich 32 in den Ausgangsbereich 40 gelangen. Der übrige Teil des Bodens 38 hat eine glatte Oberfläche und boldet eine neben der Förderstrecke 50 einherlaufende Ausweichstrecke 52, die vor dem Eingangsbereich 32 endet. Dabei ist die Anordnung so getroffen, daß von der Stelle 54 an die Breite der Ausweichstrecke 52 stetig bis auf den Wert 0 abnimmt.

Der Schwingantrieb 14 und der Steigungswinkel, sowie die Beschaffenheit der Förderstrecke 50 und der Ausweichstrecke 52 sind so auf die zu fördernden Kleinteile abgestimmt, daß in einem weiten Bereich der Förderleistung die Kleinteile auf der Förderstrecke 50 nach oben wandern und auf der Ausweichstrecke 52 nach unten rutschen. Diese Bewegungen sind in Figur 1 durch Pfeile an den Symbolen für die Kleinteile angedeutet. Außerdem ist der Steigungswinkel des Schrägförderers 12 so groß gewählt, daß aufeinanderliegende Kleinteile bei vorhandener Ausweichmöglichkeit und zumindest bei laufendem Antrieb voneinander abrutschen.

Der Orientierungsförderer 20 hat eine dem Schrägförderer 12 zukehrte Seitenwand 58, die eine der Öffnung 46 des Schrägförderers 12 gegenüberliegende Öffnung 59 aufweist, welche in einen Eingangsbereich 60 führt. Dieser hat einen Boden 62, der sich gemäß dem Winkelsymbol c schräg nach unten bis auf die Höhe einer Orientierungsstrecke 64 absenkt. Diese hat eine Lauffläche, die in der Breite von einer Rückwand 65 und einer Längskante 66 begrenzt ist, welche etwa in Breitenmitte des Orientierungsförderers 20 verläuft. Parallel neben der Orientierungsstrecke 64 ist eine Rückführstrecke 68 angeordnet, die in der Breite von der Seitenwand 58 und einer Zwischenwand 70 begrenzt ist, welche bis zur Längskante 66 hochgezogen ist.

Die Zwischenwand 70 hat einen dem Eingangsbereich 60 zukehrten Wandabschnitt 72, welcher den Eingangsbereich 60 gegen einen Übergangsbereich 74 zur Orientierungsstrecke 65 stetig verschmälert. Die Rückführstrecke 68 hat einen Boden 76, der gegen die Seitenwand 58 hin leicht abfällt, welche am Ausgang der Rückführstrecke 68 mit einer bis zum Boden 76 reichenden Öffnung 77 versehen ist. Diese liegt nach dem Zusammenbau der Teile der Randausklinkung 44 in der Seitenwand 42 des Schwenkförderers 12 gegenüber, wobei ein zungenartiger Ansatz 78 des Bodens 76 in den Eingangsbereich 32 des Schrägförderers 12 hineinragt. Die Höhe der Seitenwand 58 ist zwischen den Punkten d und e bis auf eine Überlaufkante 79 (Figur 2) abgesenkt, die einen Stau von Kleinteilen in der Rückführstrecke 68 verhindert.

Die Orientierungsstrecke 64 geht schnittstellenfrei in eine Ausgangsstrecke 80 über, die als Pufferstrecke ausgebildet ist und gegebenenfalls ein auswechselbares Zusatzteil sein kann. Die Orientierungsstrecke 64 selbst ist mit in der Zeichnung nur schematisch angedeuteten Schikanen 82 versehen, welche nicht orientierte Kleinteile über die Längskante 66 in die Rückführstrecke 68 auslenken. Die Lauffläche und die Schikanen der Orientierungsstrecke 64 sind den zu fördernden Kleinteilen angepaßt und zweckmäßig als auswechselbare Teile ausgebildet.

Die beschriebene Einrichtung arbeitet wie folgt:
Der Schwingantrieb 14 befördert das im Speicherbehälter 10 enthaltene Haufwerk der Kleinteile, beispielsweise Ringscheiben, gegen die Behälterecke 26, von wo die Kleinteile durch die Öffnung 30 in den Eingangsbereich 32 des Schrägförderers 12 gelangen. Der Zustrom in den Eingangsbereich 32 kann abhängig von dessen Belegung mit Hilfe von nicht dargestellten Sensoren gesteuert erfolgen. In vielen Fällen kommt man jedoch ohne eine zusätzliche Steuerungseinrichtung aus, weil der Zustrom selbsttätig gedrosselt wird, wenn sich der Füllstand im Eingangsbereich 32 dem oberen Rand der Öffnung 30 nähert. Der Bodenwinkel b des Speicherbehälters 10 ist zweckmäßig etwas größer als der Steigungswinkel des Schrägförderers 12 gewählt, da mit im Speicherbehälter 10 eine Förderung des Kleinteile-Haufwerks in die Behälterecke 26 in jedem Fall gewährleistet ist.

Vom Eingangsbereich 32 des Schrägförderers 12 werden die auf dessen Boden 38 aufliegenden Kleinteile zunächst über dessen gesamte Breite in Richtung der Pfeile nach links bewegt. Am Beginn der Ausweichstrecke 52 jedoch engt sich die Förderbreite allmählich auf die Breite der Förderstrecke 50 ein, auf welcher die Kleinteile nach oben mitgenommen werden. Die dabei aus der Förderstrecke 50 seitlich herausgedrängten und auf die Ausweichstrecke 52 gelangenden Kleinteile rutschen auf dieser nach unten gegen den Eingangsbereich 32 ab und werden dort erneut in die Förderstrecke 50 eingeschleust. Auf diese Weise entsteht im Schrägförderer 12 ab einer bestimmten Belegung bzw. Förderleistung ein die Förderung nicht behindernder Umlauf, der es ohne Einbuße an Funktionssicherheit gestattet, dem Schrägförderer 12 eine gewisse Speicher- bzw. Pufferfunktion für eine Teilmenge der zu fördernden Kleinteile zuzuordnen.

Die vorteilhafte Wirkung der Ausweichstrecke 52 wird noch durch den relativ großen Steigungswinkel des Schrägförderers 12 unterstützt. Dadurch entsteht auch in der senkrecht auf der Zeichnungsebene stehenden Längsebene des Schrägförderers 12 ein Kleinteileumlauf, der ein klemmfreies Herausfördern aus dem Eingangsbereich 32 unterstützt und verhindert, daß größere Haufwerksteile aus dem Eingangsbereich 32 in den Ausgangsbereich 40 des Schrägförderers 12 gelangen. Die Kleinteile kommen dort schon mindestens weitgehend vereinzelt an und werden durch die schräge Wand 47 in den Eingangsbereich 60 des Orientierungsförderers 20 umgelenkt.

Im Eingangsbereich 60 des Orientierungsförderers 20 rutschen die Kleinteile unter dem Einfluß der Schwerkraft und des Schwingantriebes 22 in den Übergangsbereich 74, von wo sie in die Orientierungsstrecke 64 gelangen. In dieser werden nicht orientierte Kleinteile an den Schikanen 82 seitlich in die Rückführstrecke 68 abgelenkt, auf der sie in den Eingangsbereich 32 des Schrägförderers 12 zurückgeführt werden. Die orientierten Kleinteile werden in die Ausgangsstrecke 80 weitergeleitet und von dort bedarfsweise von der Arbeitsstation abgerufen. Bei Rückstau in der Orientierungsstrecke 64 fallen Kleinteile aus dem Eingangsbereich 60 oder dem Übergangsbereich 74 über die Bodenkante am Wandabschnitt 72 ebenfalls in die Rückführstrecke 68, von wo sie gezielt in den Eingangsbereich 32 des Schrägförderers 12 zurückgeführt werden.

Falls sich ausnahmsweise auch in der Rückführstrecke 68 ein Stau bilden sollte, werden die Kleinteile über die Überlaufkante 79 auf die Förderstrecke 50 des Schrägförderers 12 zurückgeführt. Durch die im Normalfall gezielte Zurückführung der Kleinteile in den Eingangsbereich 32 des Schrägförderers wird ebenfalls ein Umlauf der Kleinteile im Schrägförderer 12 unterstützt, der eine Haufwerksbildung in dessen Ausgangsbereich 40 verhindert und im Zusammenwirken mit den vorbeschriebenen, umlaufbildenden bzw. -fördernden Maßnahmen und Mitteln eine einwandfreie Funktion der Einrichtung sichergestellt.

Der Speicherbehälter 10 könnte auch als selbständige Baueinheit ausgebildet und mit einem eigenen Antrieb versehen sein. Das erfindungsgemäße Prinzip der Umlaufbildung im Schrägförderer 12 unter Einschluß der in dessen Eingangsbereich 32 sich befindenden Kleinteilemenge läßt sich auch verwirklichen, wenn anstelle des Schwingantriebes andere Fördermittel, z.B. Bandförderer, vorgesehen werden. Der Speicherbehälter 10 könnte auch direkt auf die Förderstrecke 50 eines Schrägförderers mit Schwingantrieb aufgesetzt sein, wobei eine Ausweichstrecke entfällt. Die Rückführstrecke 68 des Orientierungsförderers 20 könnte einen eigenen Antrieb haben oder auch anders konstruktiv ausgebildet sein. Wichtig ist, daß sie die abgewiesenen Kleinteile gezielt in den Eingangsbereich 32 des Schrägförderers 12 zurückführt.

**Patentansprüche**

1. Einrichtung zum Speichern und lagerichtigen Zuführen von Kleinteilen, mit einem Speicherbehälter (10) für ein ungeordnetes Haufwerk der Kleinteile, mit Mitteln zum Überführen von Kleinteilen aus dem Speicherbehälter (10) in den Eingangsbereich (32) eines linearen Schrägförderers (12), mit Mitteln (47) zum Umlenken der im höher gelegenen Ausgangsbereich (40) des Schrägförderers ankommenden Kleinteile in den Eingangsbereich (60) eines—von oben gesehen—parallel neben dem Schrägförderer (12) angeordneten Orientierungsförderers (20), und mit einer—von oben gesehen—parallel neben dem Orientierungsförderer (20) liegenden ersten Rückführstrecke (68) für vom Orientierungsförderer (20) abfallende Teile, dadurch gekennzeichnet, daß parallel neben dem Schrägförderer (12) eine vorzugsweise in der gleichen Schrägebene liegende, eine zweite Rückführstrecke bildende Ausweichstrecke (52) so angebracht ist, daß seitlich aus der Förderstrecke (50) abgedrängte Kleinteile auf der gesamten Länge der Ausweichstrecke (52) auf diese überwechseln können und deren Oberfläche und Antrieb so auf die Beschaffenheit der Kleinteile abgestimmt sind, daß diese auf der Ausweichstrecke (52) zum Eingangsbereich (32) des Schrägförderers (12) zurückgelangen.

2. Einrichtung nach Anspruch 1, dadurch gekennzeichnet, daß der Steigungswinkel des Schrägförderers (12) mindestens so groß gewählt ist, daß aufeinanderliegende Kleinteile bei vorhandener Ausweichmöglichkeit und zumindest bei laufendem Antrieb (14) voneinander abrutschen.

3. Einrichtung nach Anspruch 1 oder 2, dadurch gekennzeichnet, daß die Ausweichstrecke (52) auf der vom Orientierungsförderer (20) abgekehrten Seite der Förderstrecke (50) des Schrägförderers (12) angeordnet ist.

4. Einrichtung nach einem der Ansprüche 1 bis 3, dadurch gekennzeichnet, daß die Förderstrecke (50) und die Ausweichstrecke (52) einen gemeinsamen Antrieb (14) und ein gemeinsames Basiselement (38) haben, das zwei nebeneinanderliegende Flächenbereiche mit unterschiedlicher Oberflächenbeschaffenheit hat.

5. Einrichtung nach Anspruch 1, dadurch gekennzeichnet, daß im Eingangsbereich (32) des Schrägförderers (12) der die Förderstrecke (50) bildende Flächenbereich (48) die gesamte Breite des Basiselementes (38) einnimmt und daß die Breite des die Ausweichstrecke (52) bildenden Flächenbereichs mindestens über einen Teil von dessen Länge stetig zunimmt.

6. Einrichtung zum Speichern und lagerichtigen Zuführen von Kleinteilen, mit einem Speicherbehälter (10) für ein ungeordnetes Haufwerk der Kleinteile, mit Mitteln zum Überführen von Kleinteilen aus dem Speicherbehälter (10) in den Eingangsbereich (32) eines linearen Schrägförderers (12), mit Mitteln (46) zum Umlenken der im höher gelegenen Ausgangsbereich (40) des Schrägförderers ankommenden Kleinteile auf den Eingangsbereich (60) eines linearen,—von oben gesehen—parallel neben dem Schrägförderer (12) angeordneten und entgegengesetzt zu diesem in einen Auslauf führenden Orientierungsförderers (20), der mit Schikanen (82) zum lagerichtigen Orientieren der Kleinteile versehen ist, und der neben einer in den Auslauf führenden Orientierungsstrecke mit einer linearen, in gleicher Richtung wie die Orientierungsstrecke (64) fördernden Rückführstrecke (68) zum Aufnehmen der nicht orientierten und der überschüssigen bzw. sich stauenden Kleinteile versehen ist, welche bis zu einer die Kleinteile auf den Schrägförderer (12) abwerfenden Einrichtung (77, 78) führt, die näher an dessen Eingangsbereich (32) als an dessen Ausgangsbereich (40) angeordnet ist, insbesondere nach einem der vorhergehenden Ansprüche, dadurch gekennzeichnet, daß der Orientierungsförderer (20) als Schwingförderer ausgebildet ist und der Boden (62) seines Eingangsbereiches (60) vom Ausgangsbereich (40) des Schrägförderers (12) her gesehen schräg nach unten etwa bis auf die Höhe der Orientierungsstrecke (64) geneigt ist, daß der Übergang vom Eingangsbereich (60) des Orientierungsförderers (20) zu dessen Rückführstrecke (68) an einer Wand (72) gebildet ist, welche den Eingangsbereich (60) gegen den Übergangsbereich (74) zur Orientierungsstrecke (64) hin stetig verschmälert, daß die Rückführstrecke (68) zwischen der Orientierungsstrecke (64) und dem Schrägförderer (12) angeordnet ist, daß ferner die Rückführstrecke (68) tiefer als die Orientierungsstrecke (64), jedoch höher als der Eingangsbereich (32) des Schrägförderers (12) liegt, und daß die Rückführstrecke (68) an ihrem dem Schrägförderer (12) zugekehrten Längsrand mit einer Randleiste (58, 79) oder Bodenerhöhung versehen ist, welche sich bis zur Abwurfstelle (77, 78) für die zurückgeführten Kleinteile erstreckt.

7. Einrichtung nach Anspruch 1 oder 6, dadurch gekennzeichnet, daß die die Kleinteile auf den Schrägförderer (12) abwerfende Einrichtung (77, 78) der Rückführstrecke (68) über dem Eingangsbereich (32) des Schrägförderers (12) liegt.

8. Einrichtung nach einem der vorhergehenden Ansprüche, dadurch gekennzeichnet, daß die Rückführstrecke (68) einen eigenen Antrieb hat.

9. Einrichtung nach einem der vorhergehenden Ansprüche, dadurch gekennzeichnet, daß der Auslauf des Orientierungsförderers (20) als Pufferstrecke (80) ausgebildet ist, die mit der Orientierungsstrecke (64) vorzugsweise schnittstellenfrei verbunden ist.

10. Einrichtung nach einem der vorhergehenden Ansprüche, dadurch gekennzeichnet, daß die Zufuhr von Kleinteilen aus dem Speicherbehälter (10) auf den Eingangsbereich (32) des Schrägförderers (12) nach Maßgabe von dessen Belegung, insbesondere in dessen Eingangsbereich (32), gesteuert erfolgt.

11. Einrichtung, nach einem der vorhergehenden Ansprüche, dadurch gekennzeichnet, daß der Schrägförderer (12) als Schwingförderer ausgebildet und mit einem Speicherbehälter starr gekoppelt ist.

12. Einrichtung nach einem der Ansprüche 1 bis 11, dadurch gekennzeichnet, daß der Speicherbehälter über der Förderstrecke (50) des Schrägförderers (12) angeordnet ist.

**Revendications**

1. Dispositif pour stocker et amener dans une position appropriée du petit matériel, dispositif comportant un récipient de réserve (10) pour une accumulation sans ordre de petit matériel, des moyens pour transférer du petit matériel hors de ce récipient de réserve (10) dans la zone d'entrée (32) d'un transporteur linéaire oblique (12), des moyens (47) pour dévier le petit matériel arrivant dans la zone de sortie (40), située plus haut, du transporteur oblique, dans la zone d'entrée (60) d'un transporteur d'orientation (20) disposé, vu d'en haut, parallèlement à côté du transporteur oblique (12), et ce dispositif comportant une première voie de retour (68) qui, vue d'en haut, est placée parallèlement à côté du transporteur d'orientation (20) pour le petit matériel tombant de ce transporteur d'orientation (20), dispositif caractérisé en ce que, parallèlement à côté du transporteur oblique (12) est rapportée une voie d'évidement (52) se trouvant, de préférence, dans le même plan oblique et constituant une seconde voie de retour, de sorte que le petit matériel expulsé latéralement de la voie de transport (50) puisse passer sur cette voie d'évidement (52) sur toute la longueur de celle-ci, la surface et l'entraînement de cette voie d'évidement étant adaptés à la nature du petit matériel, de façon que celui-ci puisse revenir par cette voie d'évidement (52) jusque dans la zone d'entrée (32) du transporteur oblique (12).

2. Dispositif selon la revendication 1, caractérisé en ce que l'angle de pente du transporteur oblique (12) est choisi au moins suffisamment grand pour que de petits objets agglomérés les uns aux autres puissent glisser en se séparant les uns des autres du fait de cette possibilité d'évidements et tout au moins lorsque l'entraînement (14) fonctione.

3. Dispositif selon la revendication 1 ou 2, caractérisé en ce que la voie d'évidement (52) est disposée sur le côté opposé au transporteur d'orientation (20) de la voie de transport (50) du transporteur oblique (12).

4. Dispositif selon une des revendications 1 à 3, caractérisé en ce que la voie de transport (50) et la voie d'évidement (52) ont un entraînement commun (14) et un élément de base commun (38), qui comporte deux zones superficielles contiguës ayant des natures différentes.

5. Dispositif selon la revendication 1, caractérisé en ce que, dans la zone d'entrée (32) du transporteur oblique (12), la zone plane (48) constituant la voie de transport (50), occupe toute la largeur de l'élément de base (38) et que la largeur de la zone plane, constituant la voie d'évidement (52), croît constamment au moins sur une partie de sa longueur.

6. Dispositif pour stocker et amener dans une position appropriée du petit matériel, comportant un récipient de réserve (10) pour une accumulation sans ordre de petit matériel, des moyens pour transférer du petit matériel à partir du récipient de réserve (10) dans la zone d'entrée (32) d'un transporteur linéaire oblique (12), des moyens (47) pour dévier le petit matériel arrivant dans la zone de sortie (40), placée plus haut, du transporteur oblique sur la zone d'entrée (60) d'un transporteur linéaire d'orientation (20), qui, vu d'en haut, est disposé parallèlement à côté du transporteur oblique (12) et qui en sens contraire de celui-ci aboutit à une sortie, ce transporteur d'orientation étant muni de chicanes (82) pour orienter le petit matériel dans une position appropriée et étant muni, à côté d'une voie d'orientation aboutissant à la sortie, d'une voie linéaire de retour (68) assurant le transport dans le même sens que la voie d'orientation (64) et destinée à recevoir le petit matériel non orienté et le petit matériel en excès ou bien s'accumulant, cette voie de retour aboutissant à un dispositif (77, 78) éjectant le petit matériel sur le transporteur oblique (12) et qui est disposé plus près de la zone d'entrée (32) de ce transporteur que de sa zone de sortie (40), dispositif caractérisé en ce que le transporteur d'orientation (20) est constitué par un transporteur oscillant et le fond (62) de sa zone d'entrée (60), vu de la zone de sortie (40) du transporteur oblique (12), est incliné obliquement vers le bas à peu près jusqu'au niveau de la voie d'orientation (64), le passage de la zone d'entrée (60) du transporteur d'orientation (20) à sa voie de retour (68) étant ménagé sur une paroi (72) qui rétrécit constamment la zone d'entrée (60) par rapport à la zone de transition (74) vers la voie d'orientation (64), la voie de retour (68) étant disposée entre la voie d'orientation (64) et le transporteur oblique (12), cette voie de retour (68) étant en outre disposée plus bas que la voie d'orientation (64), mais toutefois plus haut que la zone d'entrée (32) du transporteur oblique (12), tandis que la voie de retour (68) est munie sur son bord longitudinal contigu au transporteur oblique (12) d'une baguette de bordure (58, 79), ou bien d'un exaucement du fond, qui s'étend jusqu'à l'emplacement (77, 78) où est éjecté le petit matériel en retour.

7. Dispositif selon la revendication 1 ou la revendication 6, caractérisé en ce que le dispositif (77, 78) de la voie de retour (68), éjectant le petit matériel sur le transporteur oblique (12), se situe au-dessus de la zone d'entrée (32) du transporteur oblique (12).

8. Dispositif selon une des précédentes revendications, caractérisé en ce que la voie de retour (68) a son entraînement propre.

9. Dispositif selon une des précédentes revendications, caractérisé en ce que la sortie du transporteur d'orientation (20) est constituée par une voie tampon (80) qui est reliée, de préférence sans interface, à la voie d'orientation (64).

10. Dispositif selon une des précédentes revendications, caractérisé en ce que l'amenée du petit matériel à partir du récipient de réserve (10) sur la zone d'entrée (32) du transporteur oblique (12) s'effectue de façon contrôlée en fonction de l'encombrement de ce transporteur, notamment dans sa zone d'entrée (32).

11. Dispositif selon une des précédentes revendications, caractérisé en ce que le transporteur oblique (12) est constitué par un transporteur oscillant et est couplé rigidement avec un récipient de réserve.

12. Dispositif selon une des revendications 1 à 11, caractérisé en ce que le récipient de réserve est disposé au-dessus de la voie de transport (50) du transporteur oblique (12).

**Claims**

1. Installation for storing and feeding small parts in the correct position, comprising a storage container (10) for a disordered heap of small parts, means for transferring small parts from the storage container (10) into the entry area (32) of a linear inclined conveyor (12), means (47) for deflecting the small parts, arriving in the higher exit area (40) of the inclined conveyor, into the entry area (60) of an orientation conveyor (20) arranged—as viewed from above—in parallel next to the inclined conveyor (12), and a first return stretch (68) which—as viewed from above—lies in parallel next to the orientation conveyor (20) and is intended for parts falling off the orientation conveyor (20), characterized in that an escape stretch (52), preferably lying in the same inclined plane and forming a second return stretch, is attached in parallel next to the inclined conveyor (12) in such a way that small parts pushed away laterally out of the conveying stretch (50) can move over onto the escape stretch (52) over the entire length of the latter and its surface and drive are adapted to the nature of the small parts in such a way that the latter return on the escape stretch (52) to the entry area (32) of the inclined conveyor (12).

2. Installation according to Claim 1, characterized in that the angle of inclination of the inclined conveyor (12) is selected to be at least of such a size that small parts resting on one another slide off one another at the escape means available and at least when the drive (14) is running.

3. Installation according to Claim 1 or 2, characterized in that the escape stretch (52) is arranged on the side of the conveying stretch (50) of the inclined conveyor (12), which side is remote from the orientation conveyor (20).

4. Installation according to any of Claims 1 to 3, characterized in that the conveying stretch (50) and the escape stretch (52) have a common drive (14) and a common base element (38) which has two plane areas which lie side by side and have a different surface texture.

5. Installation according to Claim 1, characterized in that, in the entry area (32) of the inclined conveyor (12), the plane area (48) forming the conveying stretch (50) occupies the entire width of the base element (38), and in that the width of the plane area forming the escape stretch (52) increases continuously at least over part of its length.

6. Installation for storing and feeding small parts in the correct position, comprising a storage container (10) for a disordered heap of small parts, means for transferring small parts from the storage container (10) into the entry area (32) of a linear inclined conveyor (12), and means (47) for deflecting the small parts, arriving in the higher exit area (40) of the inclined conveyor, onto the entry area (60) of a linear orientation conveyor (20) which—as viewed from above—is arranged in parallel next to the inclined conveyor (12) and leads in the opposite direction to the latter into a delivery section and which is provided with baffles (82) for orientating the small parts in the correct position and which, apart from an orientation stretch leading into the delivery section, is provided with a linear return stretch (68), conveying in the same direction as the orientation stretch (64), for receiving the non-orientated and the excess or blocked small parts, which return stretch (68) leads to a device (77, 78) which discharges the small parts onto the inclined conveyor (12) and is arranged closer to its entry area (32) than to its exit area (40), in particular according to any of the preceding claims, characterized in that the orientation conveyor (20) is designed as a vibrating conveyor, and the base (62) of its entry area (60), as viewed from the exit area (40) of the inclined conveyor (12), is inclined downwards at an angle to about the level of the orientation stretch (64), in that the transition from the entry area (60) of the orientation conveyor (20) to its return stretch (68) is formed at a wall (72) which continuously narrows the entry area (60) towards the transition area (74) to the orientation stretch (64), in that the return stretch (68) is arranged between the orientation stretch (64) and the inclined conveyor (12), in that, furthermore, the return stretch (68) lies deeper than the orientation stretch (64) but higher than the entry area (32) of the inclined conveyor (12), and in that the return stretch (68), at its longitudinal margin facing the inclined conveyor (12), is provided with a marginal strip (58, 79) or base elevation which extends up to the discharge point (77, 78) for the returned small parts.

7. Installation according to Claim 1 or 6, characterized in that the device (77, 78), discharging the small parts onto the inclined conveyor (12), of the return stretch (68) lies above the entry area (32) of the inclined conveyor (12).

8. Installation according to any of the preceding claims, characterized in that the return stretch (68) has a separate drive.

9. Installation according to any of the preceding claims, characterized in that the delivery section of the orientation conveyor (20) is designed as a buffer stretch (80) which is connected to the orientation stretch (64) preferably without an interface.

10. Installation according to any of the preceding claims, characterized in that the feed of small parts from the storage container (10) to the entry area (32) of the inclined conveyor (12) is effected in a controlled manner to the extent to which the inclined conveyor (12) is filled, in particular in its entry area (32).

11. Installation according to any of the preceding claims, characterized in that the inclined conveyor (12) is designed as a vibrating conveyor and is rigidly coupled to a storage container.

12. Installation according to any of Claims 1 to 11, characterized in that the storage container is arranged above the conveying stretch (50) of the inclined conveyor (12).

FIG. 1

FIG. 2